# EUROPÄISCHE PATENTSCHRIFT

(11) **EP 0 638 242 B1**
(45) Veröffentlichungstag und Bekanntmachung des Hinweises auf die Patenterteilung: **01.04.1998**
(21) Anmeldenummer: 94111744.2
(22) Anmeldetag: 28.07.1994
(51) Int. Cl.: A23C 3/00, A23C 9/142, A23C 9/20, A23C 9/14, A23C 7/04, A23C 19/028

(54) **Verfahren zur Sterifiltration von Milch**
Method for sterilizing milk by filtration
Procédé pour stériliser du lait par filtration

(30) Priorität: 09.08.1993 DE 4326665
(43) Veröffentlichungstag der Anmeldung: 15.02.1995
(73) Patentinhaber: BIOTEST PHARMA GMBH, D-63303 Dreieich (DE)
(72) Erfinder: Möller, Dr. Wolfgang, D-61440 Oberursel (DE); Stephan, Dr. Wolfgang, D-97909 Stadtprozelten (DE); Hies, Dipl. Biol. Henry, D-63322 Rödermark (DE)
(74) Vertreter: Beil, Hans Chr., Dr.

(56) Entgegenhaltungen:
- EP-A- 0 471 890
- WO-A-86/01687
- FR-A- 2 579 421
- GB-A- 2 050 797
- US-A- 5 256 437

## Beschreibung

Die vorliegende Erfindung betrifft ein Verfahren zur Gewinnung einer sterilen Milch, wobei man den Calcium-Ionen-Gehalt bevorzugt auf die Hälfte der natürlich vorhandenen Menge durch beispielsweise Ionenaustausch oder Dialyse reduziert und die Milch sodann sterilfiltriert, gegebenenfalls wieder Calcium-Ionen bis zum natürlichen Gehalt zusetzt.

Das so gewonnene Produkt weist alle biologischen Aktivitäten sowie nahezu die ursprüngliche Zusammensetzung auf, ist jedoch frei von Bakterien, Pilzen und Sporen und über längere Zeit haltbar.

Das Sekret der weiblichen Brustdrüse, im folgenden nur als Milch bezeichnet, ist in der Regel steril oder enthält nur sehr wenige Bakterien, wenn man es unter aspetischen Bedingungen gewinnt.
Die Milch wird aber sehr schnell von Mikroorganismen aus der Umgebung (der Luft, der Kuh, dem Melker, der Auffangbehälter etc.) kontaminiert.

Da Milch wegen ihrer Zusammensetzung aus Kohlehydraten, Proteinen, Fett, Mineralstoffen und Vitaminen ein ideales Wachstumsmedium für nahezu alle Mikroorganismen darstellt, verdirbt die Milch innerhalb kurzer Zeit. Durch Kühlung der Milch läßt sich das Bakterienwachstum etwas verlangsamen und die Haltbarkeit um wenige Tage verlängern.

Die Milch der ersten 5 Tage nach dem Kalben, die Kolostralmilch, ist wegen ihres hohen Proteingehaltes und wegen ihrer höheren Grundbelastung mit Keimen noch kürzer haltbar als die Normalmilch und verdirbt innerhalb 1 bis 2 Tagen trotz Kühlung bei 2-8°C.

Neben den die Milch ansäuernden Bakterien, wie z.B. den Lactobacilli, stellen besonders die humanpathogenen Bakterien ein großes Problem dar. Hierzu zählen verschiedene pathogene Stämme von Salmonella, Camphylobacter, Listeria und Staphylokokken, die speziell in nicht pasteurisierter Milch vorkommen können, oder auch Clostridien oder Bacillus spp., die über ihre hitzeresistenten Sporen die Pasteurisation bei 62 bis 74°C überstehen können.

Eine sterile Milch erhält man durch die sogenannte UHT-Behandlung, d.h. einer Hitzebehandlung bei 120°C bis 145°C für wenige Sekunden. Diese Milch ist geschmacklich deutlich minderwertiger als nicht UHT-behandelte Milch. Neben dem typischen "Kochgeschmack" ist außerdem mit einem Aktivitätsverlust biologisch aktiver Substanzen in der Milch zu rechnen. Hierzu zählen besonders die in der Milch der ersten Tage nach dem Kalben, der Kolostralmilch, vorhandenen wertvollen immunologisch wirksamen Bestandteile, wie z.B. Immunglobuline und andere immunstimmulierende Substanzen, sowie andere wichtige Proteine, wie z.B. Lactoferrin, Lactoperoxidase, Wachstumsfaktoren etc. Nur eine biologisch aktive Kolostralmilch kann aber unter anderem für die Therapie gastrointestinaler Störungen bei Mensch und Tier eingesetzt werden.

Außerdem können bei Hitzeaktivierung Toxine aus Bakterien freigesetzt werden. Insbesondere für die Endotoxine der gram-negativen Bakterien werden immer schärfere Grenzwerte in der Milch definiert, da diese Toxine bei der Pasteurisation nicht zerstört werden. Bei der UHT-Sterilisation können durch die Abtötung gram-negativer Bakterien die Endotoxine sogar um den Faktor 6 bis 7 erhöht werden (Mottar, J., Neth. Milk Dairy Journal, Vol. 41, 137-145, 1987).

Es besteht deshalb ein Bedarf für ein Verfahren, die Bakterien und Sporen zuverlässig aus Milch abzutrennen anstatt sie einfach abzutöten.

Einen Schritt in diese Richtung geht das Bactocatch-Verfahren der Firma Alfa-Laval, Schweden, das durch tangentiale Mikrofiltration die Bakterien in der Milch um 99,6% abreichert und so die Haltbarkeit der Milch um rund 50% verbessert (Malmberg, R, North European Food and Dairy Journal, Vol. 54 (1), S. 30-32, 1988). Da für diese Filtration Membranen mit einer Porengröße von mehr als 0,2 µm verwendet werden müssen, ist kein steriles Endprodukt zu erzielen, was zwangsläufig zu einer zwar etwas verbesserten, aber immer noch deutlich beschränkten Haltbarkeit führt.

In der europäischen Patentanmeldung EP 0 471 890 wird ein Verfahren beschrieben, durch reversibles Ansäuern, d.h. durch Zugabe von Säure und Natronlauge eine Kolostralmilch so zu behandeln, daß sie anschließend sterilfiltrierbar ist. Dieses Verfahren ist nur für Kolostralmilch, nicht jedoch für die in der Zusammensetzung deutlich unterschiedliche Normalmilch anwendbar.

Dabei ist aber die für die Sterilisation erforderliche Filtrierbarkeit der Normalmilch problematisch. Der Grund dafür liegt in dem in der Milch vorhandenen Casein. Trennt man das Casein z.B. durch Säurepräzipitation ab, so ist die resultierende Molke wesentlich leichter filtrierbar.

Von Casein ist bekannt, daß es Micellen bildet, die durch Calciumphosphatbrücken stabilisiert werden. Die Größe der überwiegenden Mehrzahl dieser Micellen reicht von 20 bis 300 nm. Normalerweise würde man deshalb erwarten, daß die überwiegende Anzahl der Micellen durch eine 0,2 µm Membran passieren können müßten. Woychik, J. et al. (Journal of Food Science, Vol. 57, 1, S. 46-58, 1992) konnten aber zeigen, daß bei einer Mikrofiltration über 0,1 µm- bzw. 0,2 µm-Membranen auch eine große Anzahl Micellen mit einem Durchmesser kleiner als 100 nm die Membran nicht passieren können.

Casein ist eines der am stärksten hydrophoben Proteine und neigt auch zu hydrophoben Wechselwirkungen mit Oberflächen und mit anderen Proteinen. Diese Wechselwirkungen scheinen mit dafür verantwortlich zu sein, daß sich bei der Sterilisation auf der Filteroberfläche eine Sekundärmembran aufbaut, die schnell zu einem Verblocken der Filter führt. Durch tangentiale Anstömung der Filter kann man dieses Verblocken verzögern, aber nicht verhindern. Aus diesem Grund wird nach dem Stand der Technik für die Filter eine größere Porenweite als 0,2 µm gewählt, um zusammen mit der Sekundärmembran aus Caseinaggregaten und anderen Milchproteinen gerade einen solchen Zustand zu schaffen, daß die Magermilch weitgehend filtriert wird, während die Bakterien weitgehend zurückgehalten werden.

Wegen der undefinierten Art der Sekundärmembran ist es verständlich, daß man auf diese Weise nicht zuverlässig ein steriles, d.h. 100% keimfeies Filtrat erreichen kann.

Es stellt sich daher die Aufgabe, ein Verfahren zu entwickeln, das geeignet ist, alle Bakterien und Sporen aus Milch zu entfernen, so daß man eine sterile Milch erhält, die möglichst wenig in ihrer natürlichen Zusammensetzung verändert ist und möglichst alle biologische Aktivitäten enthält.

Diese Aufgabe wird erfindungsgemäß dadurch gelöst, daß man Calcium-Ionen aus der Milch entfernt und diese sodann sterilfiltriert.

Überraschenderweise wurde daher gefunden, daß man Milch, unabhängig vom Zeitpunkt ihrer Gewinnung, einer zuverlässigen Sterilfiltration unterziehen kann, wobei ein steriles, d.h. keimfreies Produkt erhalten wird.

Die Verminderung der Ca⁺⁺-Ionen-Konzentration führt dabei zu einer Änderung der Konsistenz der Milch, so daß sie nun allgemein besser filtrierbar wird bzw. eine Sterilfiltration über 0,2µm überhaupt erst möglich wird.

Dies ist umso überraschender, da - obwohl die Entfernung von Calcium aus Milch und die damit verbundene Tatsache der Dissoziation der Caseinmicellen zu kleineren Submicellen (Aoki, T. et al, Journal of Dairy Research, Vol. 55, 189-195, 1988) bekannt war - es andererseits durch die Entfernung von Calcium-Ionen aus z.B. Magermilch zu einer Schwellung der einzelnen Micellen kommt, wobei die Viskosität der Magermilch erhöht wird (Snoeren, T., Milchwissenschaft, Vol. 39 (8), 461-463, 1984).

Umso überraschender ist der Befund, daß durch den Entzug der Calcium-Ionen die Neigung zur Bildung von Ablagerungen auf der Filteroberfläche reduziert wird und die Filtrationsleistung deutlich verbessert wird.

Vorzugsweise wird die Milch vor oder nach der Entfernung der Calcium-Ionen nach üblichen Methoden, wie z.B. durch Zentrifugation, zu Magermilch entfettet, was eine schnellere Filtration ermöglicht.

Die Entfernung der Calcium-Ionen kann unter Verwendung von Ionenaustauschermaterialien zur Bindung des Calciums, vorzugsweise Kationenaustauscher, wie z.B. Chelite P (Styrol-Divinylbenzol-Matrix mit Aminomethylphosphonsäure-Gruppen, Natrium-Form) oder Acrisit A 69 (Styrolmatrix mit Sulfonsäure-Gruppen, Natrium-Form) oder auch durch Dialyse, vorzugsweise in Gegenwart von Chelatbildnern, wie z.B. Citrat-Ionen oder EDTA, erfolgen.

Ganz besonders bevorzugt werden die Calcium-Ionen nach Entfettung der Milch über einen Kationenaustauscher, wie Chelite P (Na⁺), entfernt und nachfolgend sterilfiltriert.

Der Gehalt der Calcium-Ionen wird bevorzugt um mindestens die Hälfte, insbesondere um 50 bis 90% des anfänglichen Gehaltes reduziert.

Die Sterilfiltration kann nach bekannten Methoden durchgeführt werden, wie z.B. Filtration oder Tangentialfiltration, unter Verwendung geeigneter Tiefen- oder Membranfilter. Die Filtrierbarkeit kann verbessert werden, wenn man Filterhilfsmittel, wie z.B. Hyflo Super-Cel, bei der Filtration verwendet.

Nach der Sterilfiltration können gewünschtenfalls unter sterilen Bedingungen Calciumionen wieder zugesetzt werden, bis die ursprüngliche, natürliche Menge erreicht ist.

Mit dem erfindungsgemäßen Verfahren kann insbesondere Rinder- bzw. von Menschen herrührende Normalmilch, die frühestens 5 Tage nach der Niederkunft gewonnen wurde, verabreicht werden. Besonders bevorzugt kann aber auch Kolostralmilch der ersten 5 Tage bzw. 24 Stunden nach der Niederkunft, welche gegebenenfalls in einem geeigneten Verhältnis, wie z.B. 1:1, mit Wasser verdünnt werden kann, verarbeitet werden.

Die nach dem erfindungsgemäßen Verfahren erhaltene Milch ist in ihrer natürlichen Zusammensetzung wenig verändert, weist alle biologischen Aktivitäten auf (vgl. Proteinzusammensetzung und Antikörper-Titer gemäß Tabellen 1 und 2), während sie frei von Bakterien, Pilzen und Sporen und in flüssigem Zustand über Monate stabil ist.

Die Erfindung wird anhand der nachfolgenden Beispiele 1-6 näher erläutert.

### Beispiel 1 Eine repräsentative Probe von 5 Liter einer durch

Registrierte Schutzmarken werden als solche anerkannt. Zentrifugation entfetteten Rindermilch aus einem Pool von mehreren 1000 Litern wurde über 500 ml Chelite P (Na⁺-Form) (Fa. Serva, Heidelberg) mit einer Flußrate von 300 ml/min gegeben. Das Filtrat wurde anschließend mit 3% Filterhilfsmittel Hyflo Super-Cel versetzt und über Supra 80 Filter (Fa. Seitz) vorfiltriert (380 cm²/Flußrate 350 ml/min). Die anschließende Sterilfiltration erfolgte über EKS-Tiefenfilter (Fa. Seitz) (380 cm²/Flußrate 300 ml/min). Der Druck blieb konstant bei dem voreingestellten Druck von 1 bar. Das komplette Volumen von 5 Litern konnte so über eine Gesamtfläche von jeweils 380 cm² ohne Problem klär- und sterilfiltriert werden.

Die erhaltene Milch war frei von Bakterien, Pilzen und Sporen und in flüssigem Zustand mehr als 7 Monate stabil. Ihre Zusammensetzung ist in Tabelle 1 angegeben.

**Tabelle 1**

| Zusammensetzung der Magermilch | vor Filtration | nach Filtration |
|---|---|---|
| Protein | 32 g/l | 29 g/l |
| Calcium | 30 mmol/l | 12 mmol/l |

### Vergleichsversuch

Eine Vergleichsprobe aus dem gleichen Magermilchpool wurde ohne Entfernung der freien Calcium-Ionen direkt über Supra 80 und EKS filtriert. Bereits bei der Klärfiltration über Supra 80 war ein deutlicher Druckanstieg auf bis zu 3 bar im Verlauf der Filtration zu beobachten. Der EKS-Sterilfilter war dann bereits nach 800 ml verblockt.

### Beispiel 2

Eine repräsentative Probe von 5 Liter aus einem Pool von 2000 Litern einer durch Zentrifugation entfetteten Rinderkolostralmilch, die in den ersten 24 Stunden nach dem Kalben gewonnen wurde, wurde 1 + 1 mit Wasser verdünnt und anschließend über 500 ml Chelite P (Na⁺-Form) mit einer Flußrate von 300 ml/min gegeben. Das Filtrat wurde anschließend mit 3% Filterhilfsmittel Hyflo Super-Cel versetzt und über Supra 80 Filter vorfiltriert (380 cm²/Flußrate 350 ml/min).

Die anschließende Sterilfiltration erfolgte über EKS-Tiefenfilter (380 cm²/Flußrate 300 ml/min). Der Druck blieb konstant bei dem voreingestellten Druck von 1 bar. Das komplette Volumen von 5 Litern konnte so über eine Gesamtfläche von jeweils 380 cm² ohne Problem klär- und sterilfiltriert werden.

Die erhaltene Milch war frei von Bakterien, Pilzen und Sporen und in flüssigem Zustand mehr als 6 Monate stabil.
Insbesondere zeigte sich kein Unterschied in der antibakteriellen Aktivität der Immunglobuline im Vergleich zum Ausgangsmaterial. Ihre Zusammensetzung und biologische Aktivität sind in Tabelle 2 angegeben.

**Tabelle 2**

| Zusammensetzung der Kolostralmilch | vor Filtration | nach Filtration |
|---|---|---|
| Protein | 41 g/l | 39 g/l |
| IgG | 23 g/l | 21 g/l |
| IgM | 2 g/l | 2 g/l |
| Calcium | 21 mmol/l | 9 mmol/l |

| Antibakterieller Antikörper-Titer (passive Hämagglutination) | | |
|---|---|---|
| Anti-E.coli | 1:1280 | 1:1280 |
| Anti-Pseudomonas aeruginosa | 1:640 | 1:640 |
| Anti-Staph.aureus | 1:160 | 1:160 |

### Beispiel 3

5 Liter einer Magermilch analog Beispiel 1 wurden mit 500 ml Chelite P (Na⁺-Form) versetzt und 30 min gerührt. Die Lösung konnte nach Absetzen des Chelites abdekantiert und wie in Beispiel 1 mit dem gleichen Ergebnis filtriert werden.

### Beispiel 4

5 Liter Rinderkolostralmagermilch analog Beispiel 2 wurden unverdünnt über eine Säule mit 500 ml Chelite P (Na⁺-Form) mit einer Flußrate von 300 ml/min gegeben. Das Eluat wurde anschließend analog Beispiel 1 sterilfiltriert. Die Flußrate betrug 100 ml/min und der Druck stieg auf ca. 2,0 bar.

Eine Vergleichsprobe der Kolostralmagermilch ohne Entzug von Calcium-Ionen ließ sich nicht sterilfiltrieren.

Der sterilfiltrierten Kolostralmagermilch wurden unter aseptischen Bedingungen 20 mmol Calciumchlorid pro Liter zugesetzt. Die erhaltene Kolostralmagermilch war steril und über 6 Monate stabil.

### Beispiel 5

5 Liter durch Zentrifugation entfettete Normalmilch wurden über eine Säule mit 500 ml Arcisit A 69 (Na⁺-Form) (Fa. Acris, Heidelberg) gegeben.
Die Flußrate betrug 300 ml/min. Das Filtrat wurde anschließend analog Beispiel 1 filtriert, wobei die Flußrate 350 ml/min betrug. Der Druck blieb konstant bei dem voreingestellten Druck von 1,0 bar.

### Beispiel 6

5 Liter einer 1+1 mit Wasser verdünnten Rinderkolostralmilch analog Beispiel 2 wurden mit 500 ml Arcisit A 69 (Na⁺-Form) versetzt und 30 min gerührt. Die Lösung konnte nach dem Absetzen des Arcosits abdekantiert werden und wie in Beispiel 2 mit dem gleichen Ergebnis sterilfiltriert werden.

### Beispiel 7

1 Liter durch Zentrifugation bei 4°C entfettete humane Muttermilch wurde über eine Säule mit 100 ml Acrisit A 69 (Na⁺-Form) gegeben.
Das Filtrat wurde anschließend direkt über EKS-Tiefenfilter (Fa.Seitz) (150 cm² / Flußrate 30 ml/min) sterilfiltriert. Der Druck blieb konstant bei dem voreingestellten Druck von 1 bar.

Die erhaltene Muttermilch war frei von Bakterien, Pilzen und Sporen und in flüssigem Zustand mehr als 5 Monate stabil.

Die Zusammensetzung des erhaltenen Produktes ist in Tabelle 3 angegeben.

**Tabelle 3**

| | humane Muttermilch | nach Filtration |
|---|---|---|
| Protein | 19,4 g/l | 18,2 g/l |
| IgA | 0,81 g/l | 0,77 g/l |
| Calcium | 6,8 mmol/l | 0,7 mmol/l |

Eine Vergleichsprobe aus dem gleichen Humanmilchpool wurde ohne Entfernung der Calcium-Ionen direkt über einen 150 cm²-EKS-Filter filtriert. Bereits nach 150 ml war der Filter blockiert und die Filtration konnte nicht beendet werden.

## Patentansprüche

1. Verfahren zur Gewinnung einer sterilen Milch, dadurch gekennzeichnet, daß Calcium-Ionen aus der Milch entfernt werden und die Milch anschließend sterilfiltriert wird.

2. Verfahren nach Anspruch 1, dadurch gekennzeichnet, daß die Milch vor oder nach der Abtrennung von Calcium-Ionen entfettet wird.

3. Verfahren nach Anspruch 1 oder 2, dadurch gekennzeichnet, daß die Calcium-Ionen zur Entfernung an einen festen Träger gebunden werden.

4. Verfahren nach Anspruch 3, dadurch gekennzeichnet, daß die Calcium-Ionen an einen Kationenaustauscher gebunden werden.

5. Verfahren nach Anspruch 4, dadurch gekennzeichnet, daß die Calcium-Ionen an ein Polymer aus einer Styrol/Divinylbenzol-Matrix mit Aminomethylphosphonsäure-Gruppen, Natrium-Form, oder an ein Polymer aus einer Styrolmatrix mit Sulfonsäure-Gruppen, Natrium-Form, gebunden werden.

6. Verfahren nach Anspruch 1 oder 2, dadurch gekennzeichnet, daß die Calcium-Ionen durch Dialyseverfahren aus der Milch entfernt werden.

7. Verfahren nach Anspruch 6, dadurch gekennzeichnet, daß man die Calcium-Ionen vor der Dialyse mit Citrat chelatisiert.

8. Verfahren nach einem der Ansprüche 1 bis 7, dadurch gekennzeichnet, daß der Calcium-Ionen-Gehalt um mindestens die Hälfte, bezogen auf den natürlichen Gehalt reduziert wird.

9. Verfahren nach einem der Ansprüche 1 bis 8, dadurch gekennzeichnet, daß der Milch nach der Sterilfiltration wieder Calcium-Ionen zugesetzt werden.

10. Verfahren nach einem der Ansprüche 1 bis 9, dadurch gekennzeichnet, daß man von Rindern stammende Milch verarbeitet.

11. Verfahren nach einem der Ansprüche 1 bis 9, dadurch gekennzeichnet, daß man von Menschen stammende Milch verarbeitet.

12. Verfahren nach einem der Ansprüche 1-11, dadurch gekennzeichnet, daß man Milch der ersten 5 Tage nach der Niederkunft verarbeitet.

13. Verfahren nach einem der Ansprüche 1 bis 12, dadurch gekennzeichnet, daß man Milch der ersten 24 Stunden nach der Niederkunft verarbeitet.

14. Verfahren nach einem der Ansprüche 1 bis 11, dadurch gekennzeichnet, daß man Milch verarbeitet, die frühestens 5 Tage nach der Niederkunft gewonnen wird.

15. Verfahren nach einem der Ansprüche 1 bis 14, dadurch gekennzeichnet, daß die Sterilfiltration über Tiefen- oder Membranfilter erfolgt.

16. Verfahren nach einem der Ansprüche 1 bis 15, dadurch gekennzeichnet, daß man bei der Filtration Filterhilfsmittel zusetzt.

## Claims

1. A process for obtaining a sterile milk, characterised in that calcium ions are removed from the milk and the milk is then sterilised by filtration.

2. A process according to claim 1, characterised in that the milk is defatted before or after the removal of calcium ions.

3. A process according to claim 1 or 2, characterised in that the calcium ions are bound to a solid support in order to remove them.

4. A process according to claim 3, characterised in that the calcium ions are bound to a cation exchanger.

5. A process according to claim 4, characterised in that the calcium ions are bound to a polymer consisting of a styrene-divinylbenzene matrix containing aminomethylphosphonic acid groups, sodium form, or to a polymer consisting of a styrene matrix containing sulphonic acid groups, sodium form.

6. A process according to claim 1 or 2, characterised in that the calcium ions are removed from the milk by a dialysis process.

7. A process according to claim 6, characterised in that prior to the dialysis, the calcium ions are chelated with citrate.

8. A process according to one of claims 1 to 7, characterised in that the calcium ion content is decreased by at least one half, referred to the natural content.

9. A process according to one of claims 1 to 8, characterised in that calcium ions are again added to the milk after the sterilisation by filtration.

10. A process according to one of claims 1 to 9, characterised in that milk obtained from cows is processed.

11. A process according to one of claims 1 to 9, characterised in that milk obtained from humans is processed.

12. A process according to one of claims 1 to 11, characterised in that milk produced during the first 5 days after the delivery is processed.

13. A process according to one of claims 1 to 12, characterised in that milk produced during the first 24 hours after the delivery is processed.

14. A process according to one of claims 1 to 11, characterised in that milk is processed which at the earliest has been obtained 5 days after the delivery.

15. A process according to one of claims 1 to 14, characterised in that the sterilisation by filtration is carried out using deep-bed filters or membrane filters.

16. A process according to one of claims 1 to 15, characterised in that filter aids are added during the filtration.

## Revendications

1. Procédé d'obtention d'un lait stérile, caractérisé en ce qu'on sépare les ions calcium du lait et qu'on soumet ensuite le lait à une filtration stérile.

2. Procédé selon la revendication 1, caractérisé en ce que le lait est écrémé avant ou après la séparation des ions calcium.

3. Procédé selon la revendication 1 ou 2, caractérisé en ce que les ions calcium sont liés en vue de leur séparation à un support solide.

4. Procédé selon la revendication 3, caractérisé en ce que les ions calcium sont liés à un échangeur de cations.

5. Procédé selon la revendication 4, caractérisé en ce que les ions calcium sont liés à un polymère à matrice de styrène/divinylbenzène à groupes acide aminométhylphosphonique, forme sodium, ou à un polymère à matrice de styrène à groupes acide sulfonique, forme sodium.

6. Procédé selon la revendication 1 ou 2, caractérisé en ce que les ions calcium sont séparés du lait par un procédé de dialyse.

7. Procédé selon la revendication 6, caractérisé en ce qu'on chélate les ions calcium avec du citrate avant la dialyse.

8. Procédé selon l'une quelconque des revendications 1 à 7, caractérisé en ce qu'on réduit la teneur en ions calcium d'au moins la moitié, par rapport à la teneur naturelle.

9. Procédé selon une quelconque des revendications 1 à 8, caractérisé en ce qu'on ajoute de nouveau des ions calcium au lait après la filtration stérile.

10. Procédé selon l'une quelconque des revendication 1 à 9, caractérisé en ce qu'on traite du lait d'origine bovine.

11. Procédé selon l'une quelconque des revendications 1 à 9, caractérisé en ce qu'on traite du lait d'origine humaine.

12. Procédé selon l'une quelconque des revendications 1 à 11, caractérisé en ce qu'on traite du lait des cinq premiers jours après l'accouchement.

13. Procédé selon l'une quelconque des revendications 1 à 12, caractérisé en ce qu'on traite du lait des 24 premières heures après l'accouchement.

14. Procédé selon l'une quelconque des revendications 1 à 11, caractérisé en ce qu'on traite du lait obtenu au plus tôt 5 jours après l'accouchement.

15. Procédé selon l'une quelconque des revendications 1 à 14, caractérisé en ce que la filtration stérile est effectuée sur des filtres à lit profond ou à membrane.

16. Procédé selon l'une quelconque des revendications 1 à 15, caractérisé en ce qu'on ajoute des auxiliaires de filtration lors de la filtration.
